# EUROPEAN PATENT APPLICATION

(11) **EP 4 789 990 A1**
(43) Date of publication of application: **12.08.2026**
(21) Application number: 25156174.2
(22) Date of filing: 06.02.2025
(51) Int. Cl.: B65G 1/04

(54) **A PORT FOR ACCESSING CONTAINERS OF AN AUTOMATED STORAGE AND RETRIEVAL SYSTEM**

(71) Applicant: AutoStore Technology AS, 5578 Nedre Vats (NO)
(72) Inventor: SAGEN, Audun, 5578 Nedre Vats (NO); GJERDEVIK, Øystein, 5578 Nedre Vats (NO); MYRBAKKEN, Joakim A, 5578 Nedre Vats (NO); IWE, Harald, 5578 Nedre Vats (NO)
(74) Representative: Kilburn & Strode LLP

(57) **Abstract**

The disclosure relates to a port (600) for an automated storage and retrieval system, the port (600) comprising a conveyor (602) configured to transport a container (602) and comprising a transfer position (608) for transfer of the container (602) onto and/or off of the conveyor (602) and a presentation position (606) for providing access to the container (602) and at least three position sensors (624, 626, 628) each disposed at a different respective point along a length of the conveyor (602) and configured to determine positioning of the container (602).

## Description

### TECHNICAL FIELD

The disclosure relates to a port. More particularly, it relates to a port for an automated storage and retrieval system, an automated storage and retrieval system, and a method performed by a port for an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

At a port, a movement mechanism may move the containers between the grid and a location providing access to the containers. Containers may be sequentially transported to this location in order for their respective goods to be accessed in turn. Alternatively, or in addition, goods may be put into one or more of the containers at this location for storing in the grid. A port therefore provides an interface between the interior of the grid where containers are stored and the exterior of the grid where containers are accessed.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5a and Fig. 5b show an example of movement of containers on a conveyor according to the present disclosure;
Fig. 6 shows an example port according to the present disclosure;
Fig. 7 shows a further example port according to the present disclosure;
Fig. 8 shows an example of operation of position sensors according to the present disclosure;
Fig. 9 shows a further example port according to the present disclosure;
Fig. 10 shows an example method according to the present disclosure.

### DETAILED DESCRIPTION

In overview, the disclosure relates to a port for an automated storage and retrieval system. The port includes a conveyor configured to transport a container. The container may be disposed on the conveyor and thereby transported between a first end of the conveyor and a second end of the conveyor. The second end may be disposed within a storage grid of the automated storage and retrieval system and the first end may be outside the footprint of the storage grid. The conveyor includes a transfer position for transfer of the container onto and/or off of the conveyor. A robot may lower a container into or onto the transfer position of the conveyor and may raise a container from the transfer position of the conveyor. As such, the transfer position may be within the footprint of the storage grid. The conveyor includes a presentation position for providing access to the container, which may enable a human operator or robotic picking device to remove items from an interior of the container. The presentation position may be located at the first end of the conveyor (i.e. exterior to the storage grid). The port also includes at least three position sensors configured to determine positioning of the container. The position sensors are disposed at different points along a length of the conveyor, i.e. along a direction between the first end and the second end of the conveyor.

Automation of the movement of the container from the storage grid to the transfer position to the presentation position increases the efficiency with which items can be retrieved from the storage grid. To enable this, some approaches may use sensors on either side of the lowered/raised container to ensure that it is correctly positioned before the transition between robot and conveyor (or vice versa) is performed.

However, there may be various different locations a container could be disposed in or moved through along the length of a conveyor. It will in general take some non-zero time period for the container to move between such locations. There may also be multiple containers disposed on the conveyor at any one time. Sensors on either side of the raised/lowered container may only provide an indication of the container when it moves from within the transfer position to outside the transfer position. For example, a light beam will only transition from broken to unbroken, or vice versa, when the container moves past the light beam. This arrangement does not provide an indication of container position when a container is stationary, or moving on another part of the conveyor. This may lead to a controller of the port losing track of where containers are located on the conveyor, potentially leading to collisions with other containers or other moving parts of the port. This can lead to damage and/or unsafe operation of the port.

In addition, some ports may comprise a cover which can be selectively opened for access or closed for safety dependent on the position of the container. Uncertainty as to where containers are may lead to opening of the cover when it is not actually safe to do so.

While determining whether a container is in the correct location relative to a raising/lowering robot is useful, it does not guarantee accurate positioning of the container relative to other parts of the system, such as other containers or an access opening. The use of position sensors at three different points along the length of the conveyor, as described herein, disambiguates the position of the container. This enables monitoring of the positions and movement of containers in a port to provide more reliable and safer operation of the port.

While monitoring the position of the container relative to the transfer position may be adequate for some operational scenarios, the present inventors have realised that there is a need to further increase the safety of ports. For example, approaches based on opening a cover of the port as soon as the container moves outside position sensors either side of the transfer position may lead to unsafe operator access to the interior of the port while the container is still moving. Implementing a delay may still be unsafe if the delay is not long enough, or may lead to time inefficiencies if it is too long. Moreover, if the container were to move or slip relative to the surface of the conveyor, this would further decrease the accuracy of relying on a fixed delay as opposed to detecting the actual location of the container. The implementation and particular locations of the position sensors as described herein therefore lead to a particular increase in safety and reliability.

In addition, the position sensors as described herein can provide a binary indication of where a container is located. They may avoid complexities relating to machine vision or edge detection, which may lead to increased engineering complexity, costs and latency. The claimed subject matter therefore provides a particularly reliable, cost-effective and efficient technique for increasing safety of a port.

### Automated storage and retrieval system overview

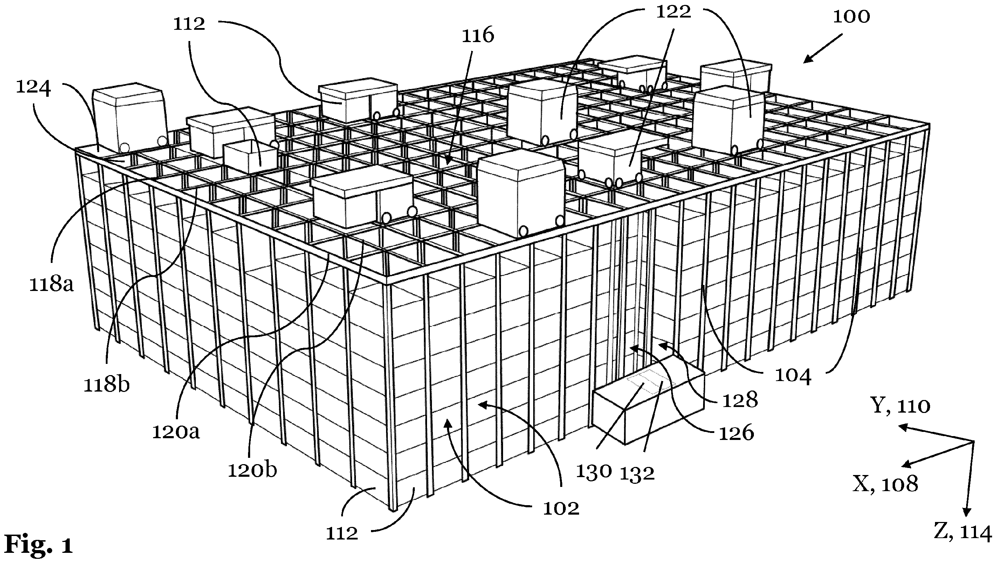

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

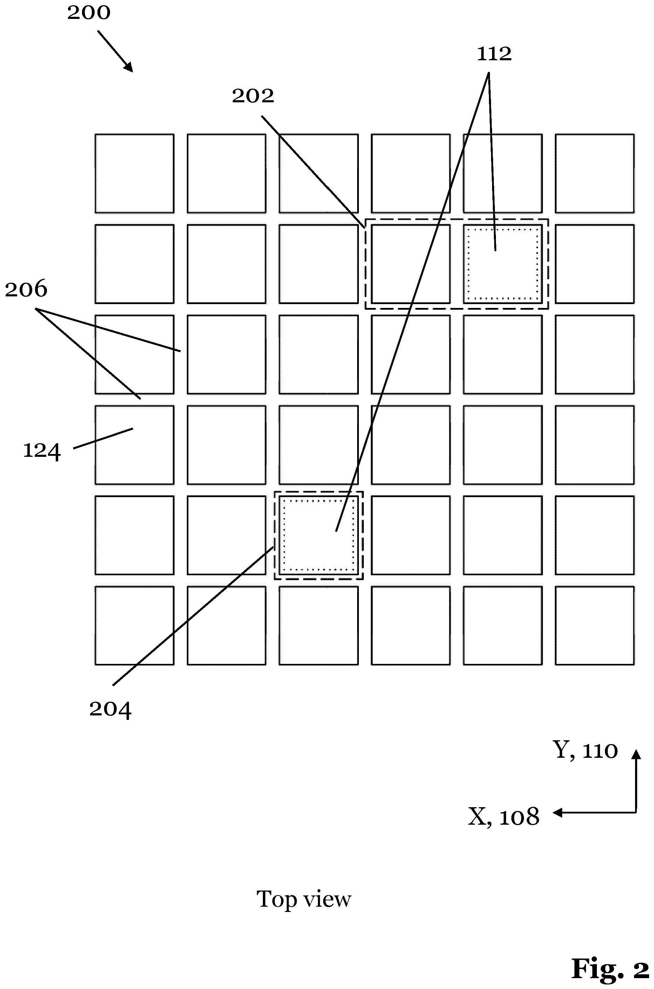

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

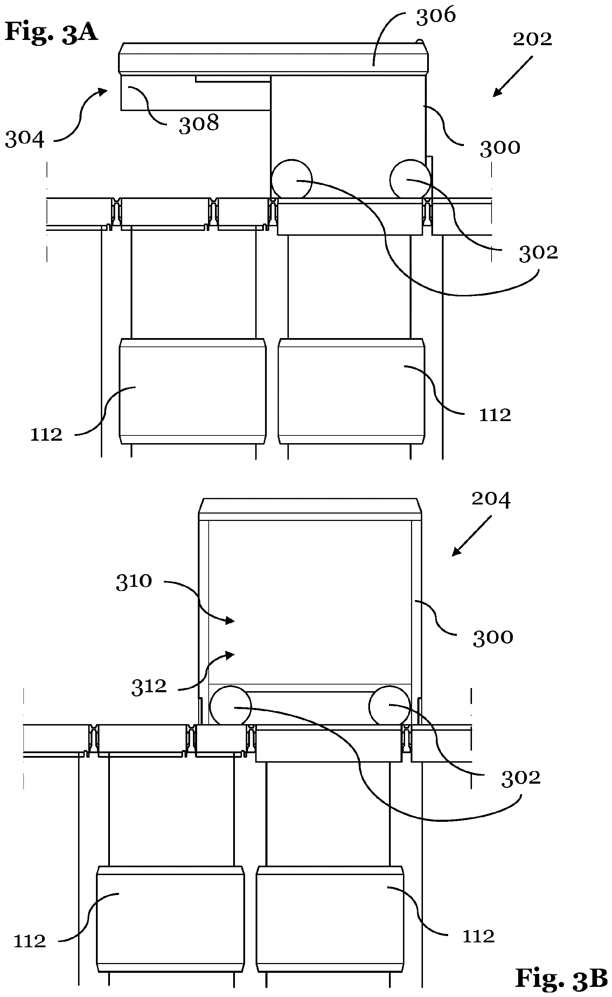

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, `internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

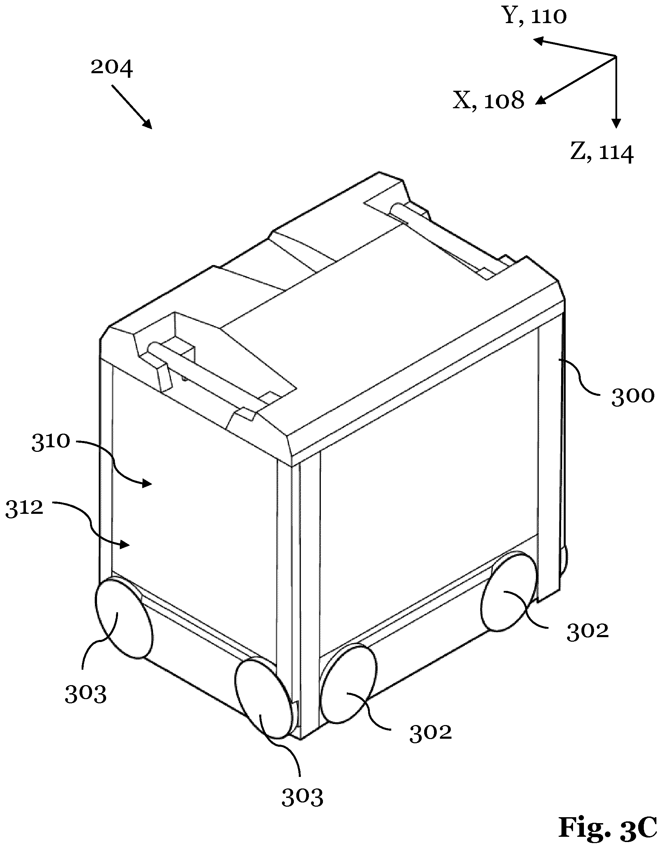

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

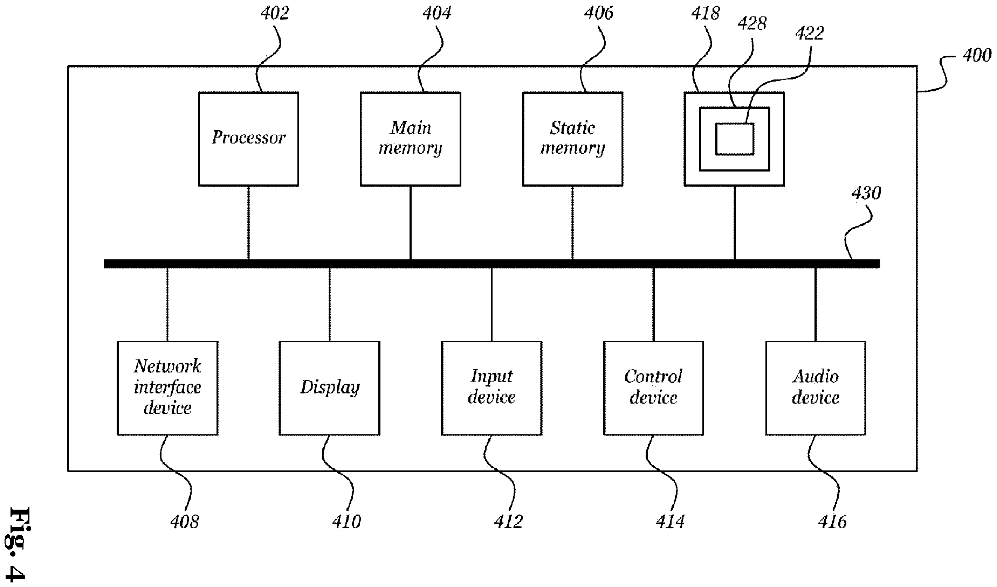

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

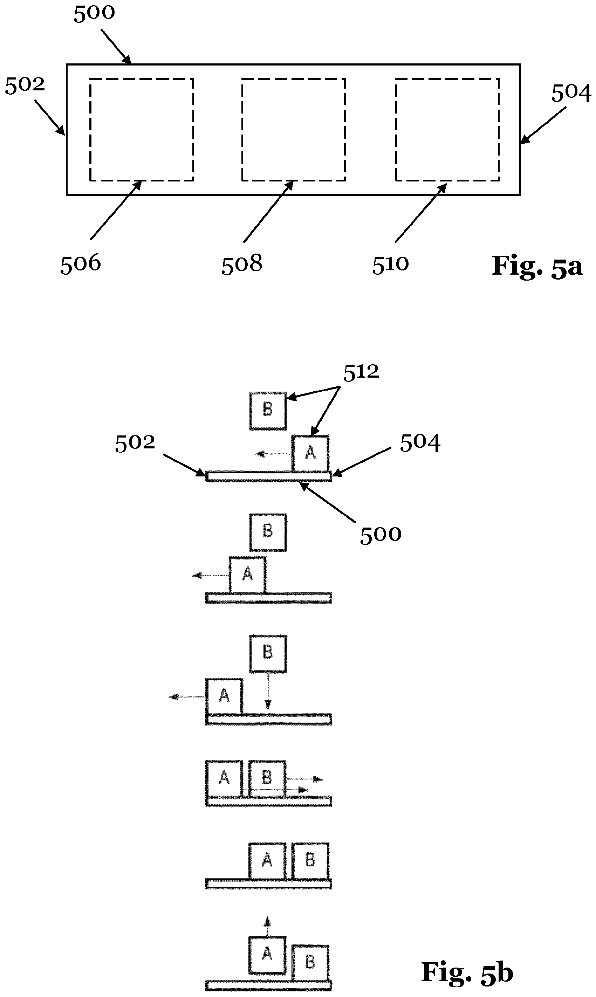

Fig. 5a and Fig. 5b show an example of movement of containers on a conveyor 500 according to the present disclosure. The conveyor 500 may be comprised in a port 130, 132 as described in relation to Fig. 1.

The conveyor 500 is configured to transport one or more containers 512 along its length, i.e. between a first end 502 and a second end 504 of the conveyor 500. In use, i.e. when implemented in a port coupled to a storage grid, the first end 502 may be disposed exterior to the storage grid and the second end 504 may be disposed within the footprint of the storage grid. As such, the conveyor 500 may be configured to transport containers 512 out of and/or into the storage grid. The first end 502 may be generally designated as the front of the conveyor 500 and the second end 504 may be generally designated as the rear of the conveyor 500. Movement towards the first end 502 may be generally designated as forward or frontward movement and movement towards the second end 504 may be generally designated as rearward or backward movement.

The containers 512 may be disposed on and supported by an upper surface of the conveyor 500. The conveyor 500 may be described as a conveyor belt. The conveyor 500 may comprise a belt wrapped around two or more drums. One or more of the drums may be driven to rotate, for example by an (electric) motor. The drum(s) may be coupled to the belt through friction and optionally through one or more interlocking features to cause the belt to rotate about the drums. A container 512 disposed on the belt of the conveyor 500 may thereby be moved along the length of the conveyor. This movement may be to the left (forward) or the right (backward) as depicted in Fig. 5a and Fig. 5b, depending on whether the drum(s) is/are driven to rotate in a clockwise or anticlockwise direction.

Containers 512 may be disposed on the conveyor in a number of different defined positions. Each position may have corresponding dimensions to those of a container 512, e.g. such that a container 512 fits within the respective position (optionally with an additional spatial margin to account for errors in placement of the containers 512). These positions are defined herein relative to the overall footprint of the conveyor. In other words, they are defined and discussed herein as being stationary positions rather than moving with movement of the conveyor surface. The positions may be considered as being defined in two spatial dimensions in a plane parallel to the surface of the conveyor. The positions may be considered as being defined in three spatial dimensions additionally comprising a height above the surface of the conveyor.

The conveyor 500 comprises a presentation position 506 for providing access to the container 512. The presentation position 506 may be located at or adjacent to the first end 502 of the conveyor. The presentation position 506 may be located outside of the footprint of the storage grid. A human operator or robotic picking device may access the interior of the container 512 when it is disposed in the presentation position 506, in order to retrieve an item from the container 512 and/or place an item in the container 512.

The conveyor 500 comprises a transfer position 508 for transfer of the container 512 onto and/or off of the conveyor 500. The transfer position 508 may be within a footprint of the storage grid. The transfer position 508 may be aligned with, i.e. at the bottom of, a port column 126, 128 as described in relation to Fig. 1. A robot 122, 202, 204 may lower a container 512 from the top of the storage grid onto transfer position 508 of the conveyor 500 and may raise a container 512 from the transfer position 508 of the conveyor 500 to the top of the storage grid. The transfer position 508 may be located in a central location along the length of the conveyor 500 (as depicted in Fig. 5a). In some examples, the transfer position 508 may be located at the second end 504 of the conveyor 500 (e.g. if the buffer position 510 is not present). Other locations of the transfer position 508 are also possible dependent on the length of the conveyor 500 and the fraction of it that is disposed within the storage grid.

The conveyor 500 may comprise a buffer position 510. The buffer position 510 may be for temporary storage of a container 512, in particular to enable rearrangement of the relative locations of multiple containers 512 on the conveyor 500. The buffer position 510 may be disposed within a footprint of the storage grid. The buffer position 510 may be located at or adjacent to the second end 504 of the storage grid.

With respect to the length of the conveyor 500, the presentation position 506 may disposed forward of the transfer position 508, which may be disposed forward of the buffer position 510. The transfer position 508 may be disposed rearward of the presentation position 506. The buffer position 510 may be disposed rearward of the transfer position 508. In some examples, the conveyor 500 may comprise multiple presentation positions 506, multiple transfer positions 508 and/or multiple buffer positions 510.

Fig. 5b depicts a schematic showing example movement of two containers 512, labelled 'A' and 'B', with respect to the conveyor 500 having the first end 502 and the second end 504. While Fig. 5a depicted a top-down view, Fig. 5b depicts a side-on view. Fig. 5b includes six schematic depictions. Only the top depiction has been labelled for better visibility, though it will be appreciated that corresponding labels apply to the other depictions. Each depiction may correspond to a different respective point in time. The top depiction may occur first, with the second down depiction occurring next, and so on until the bottom depiction which occurs last in the sequence.

As shown in the first depiction in Fig. 5b, a container A is in the buffer position 510 and a container B is above the transfer position 508. For example, a robot 122, 202, 204 may have lowered the container B most of the way down the port column 126, 128 ready for disposing on the transfer position 508 of the conveyor 500.

As shown in the second depiction in Fig. 5b, the conveyor 500 is moving in the forward direction such that the container A is moving in the forward direction. The container A has been moved from the buffer position 510 to a point along the length of the conveyor 500 between the transfer position 508 and the presentation position 506. The container B is still held above the transfer position 508.

As shown in the third depiction in Fig. 5b, the conveyor has continued to be moved in the forward direction such that container A has been moved to the presentation position 506. Now that the container A has been disposed in the presentation position 506, one or more items can be disposed in or removed from the container A. Now that the container A has passed through the transfer position 508 leaving it empty, the container B can be lowered to the transfer position 508. This can occur while the one or more items are being disposed in or removed from the container A.

As shown in the fourth depiction in Fig. 5b, the conveyor 500 is switched to move in the rearward direction such that the container A and the container B disposed on the conveyor also move in the rearward direction.

As shown in the fifth depiction in Fig. 5b, the conveyor 500 has moved in the rearward direction such that the container A has been moved to the transfer position 508 and the container B has been moved to the buffer position 510.

As shown in the sixth depiction in Fig. 5b, the container A is being lifted from the transfer position 508 by a robot 122, 202, 204. The container B is still in the buffer position.

While not depicted in Fig. 5b, it will be appreciated that, once the container A has been lifted high enough, the container B may be moved by the conveyor 500 to the presentation position 506, and subsequently a further container may be lowered onto the transfer position 508. As such, Fig. 5b depicts an example via which the movement of the conveyor and the positions of the conveyor 500 can be utilised to efficiently combine provision of access to containers 512 and exchanging containers 512 with the storage grid.

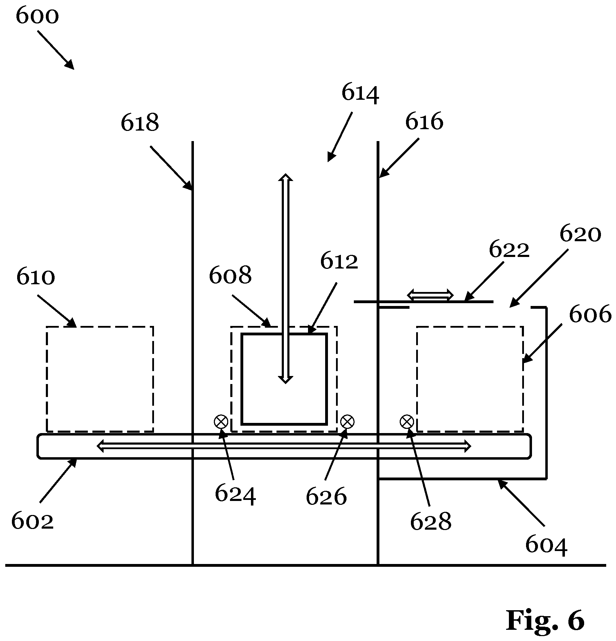

Fig. 6 shows an example port 600 according to the present disclosure. The port 600 may correspond to and comprise corresponding features to the one of the ports 130, 132 discussed in relation to Fig. 1. The port 600 comprises a conveyor 602, which may correspond to the conveyor 502 of Fig 5. A horizontal block arrow is shown in Fig. 6 to depict the movement of the conveyor 602 (and thereby the container(s) thereon). The conveyor 602 may comprise a presentation position 606, a transfer position 608 and a buffer position 610, which may correspond respectively to the presentation position 506, transfer position 508 and buffer position 510 of Fig. 5. Fig. 6 depicts a side-on view of the port 600.

Fig. 6 depicts a container 612 in the transfer position 608. The container 612 may correspond to the container 512 of Fig. 5. A port column 614 is depicted between vertical frame members 616, 618. The port column 614 may correspond to the port columns 126, 128 of Fig. 1 and the vertical frame members 616, 618 may correspond to the vertical frame members 104 of Fig. 1. A vertical block arrow is shown in Fig. 6 to depict the movement of the container 612 down or up the port column 614 to or from the transfer position 608.

The port 600 may comprise a housing 604. The housing 604 may be provided on an exterior of the storage grid defined by the vertical frame members 616, 618 such that it protrudes from the storage grid. The housing 604 may comprise one or more panels for shielding a human operator or robotic picking device from moving components in an interior of the port 600. The housing 604 may comprise an opening 620 through which the human operator or robotic picking device can access the interior of the container 612 when it is in the presentation position 606, in order to retrieve items therefrom or add items thereto.

The port 600 may comprise a cover or hatch 622, which can selectively cover and uncover the opening through being driven to slide in a horizontal direction (as depicted by the horizontal adjacent block arrow). To uncover the opening 620, the cover 622 may slide into the port column 614, i.e. into the storage grid. The selective opening of the cover 622 increases safety through enabling access to the interior of the port 600 to be restricted such that it is only possible when no components are moving within the port 600/when any containers 612 are correctly and appropriately positioned. The opening 620 may be an aperture oriented in a horizontal plane. The cover 622 may also be oriented in a corresponding horizontal plane in order to selectively block or obstruct access to the aperture. The cover 622 may comprise or be coupled to a driver and/or motor configured to cause the movement of the cover 622.

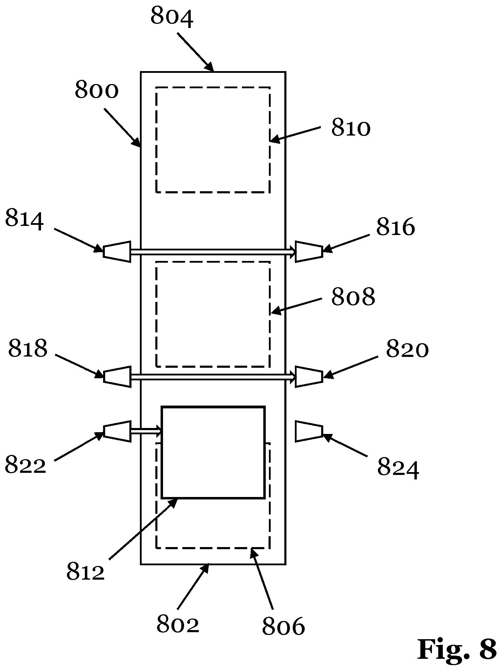

The port 600 comprises at least three position sensors 624, 626, 628. Each of the position sensors 624, 626, 628 is disposed at a different respective point along the length of the conveyor 602. Each of the position sensors may comprise a respective transmitter and a respective receiver, as described further in relation to Fig. 8. Each transmitter may be disposed on one lateral side of the conveyor 602, with the corresponding receiver disposed on the other lateral side of the conveyor 602 facing the transmitter. In other words, the transmitters and receivers may be disposed outside the footprint of the conveyor and may be oriented such that signals transmitted by the transmitters and received by the receivers travel in a direction perpendicular to the direction of movement of the conveyor 602 between the first end and the second end thereof. The position sensors 624, 626, 628, i.e. the transmitters and the receivers, may be disposed at a vertical height above the vertical height of a top surface of the conveyor 602, e.g. 1-10 cm above the vertical height of the top surface of the conveyor 602.

Each of the position sensors 624, 626, 628, e.g. the respective receivers thereof, may be communicatively coupled to a controller of the port 600 or of the overall automated storage and retrieval system. For example, each receiver may be configured to transmit a signal to the controller indicating whether or not it is receiving/detecting a signal transmitted to it by the corresponding transmitter. The controller may also be communicatively coupled to the further components of the port, e.g. to the conveyor 602 or a driver thereof, to the cover 622 or a driver thereof, etc.

A first position sensor 624 may be disposed adjacent to a first (longitudinal) side of the transfer position 608, i.e. immediately rearward to the transfer position 608. A second position sensor 626 may be disposed adjacent to a second (longitudinal) side of the transfer position 608, i.e. immediately forward of the transfer position 608. In other words, the first position sensor 624 and the second position sensor 626 may be disposed on opposite sides of the transfer position 608 along the length of the conveyor 602. There may be no spatial separation between the first and second position sensors 624, 626 and the respective sides of the transfer position 608, or the spatial separation may be very small (e.g. 1-20 mm).

The first position sensor 624 and the second position sensor 626 may collectively determine whether the container 612 is accurately located in the transfer position 608, e.g. for lifting of the container 612 by a robot. For example, if the container 612 is transported by the conveyor from the presentation position 606 in a rearward direction, the receiver of the second position sensor 626 will not receive a signal from its corresponding transmitter while the container 612 passes between the transmitter and the receiver. If the receiver of the first position sensor 624 begins not to receive a signal from its corresponding transmitter, this may indicate that the container 612 has been moved too far rearward. When the container 612 is fully within the transfer position 608, the receivers of both of each of the first position sensor 624 and the second position sensor 626 will receive the respective signals from their respective transmitters. The receivers may each transmit respective signals to the controller indicating this, which may in response transmit a further signal to a robot (to which it is communicatively coupled) instructing it to begin lifting the container 612 up through the port column 614.

A third position sensor 628 may be disposed forward of the first position sensor 624 and the second position sensor 626. In other words, the third position sensor 628 may be disposed more proximal to the first end of the conveyor (see Fig. 5a) than the first position sensor 624 is, and may be disposed more proximal to the first end of the conveyor than the second position sensor 626 is. As depicted in Fig. 6, the third position sensor 628 may be located at a point along the length of the conveyor 602 between the transfer position 608 and the presentation position 606. The third position sensor 628 may be disposed adjacent to the presentation position 606, i.e. immediately rearward of the presentation position 606 along the length of the conveyor 606. There may be no spatial separation between the third position sensor 628 and the rearward side of the presentation position 606, or the spatial separation may be very small (e.g. 1-20 mm).

As further explained in relation to Fig. 8, as the container 612 moves in the forward direction towards the presentation position 606, it may not be known when it actually reaches and is fully within the presentation position 606. This means it may not be accurately known when it is safe to open the cover 622 to enable access to the container 620 through the opening 620. While the container 612 moves forward between the transmitter and receiver of the third position sensor 628, the receiver may not receive a signal from the transmitter. However, when the container 612 has moved all the way to the front of the conveyor 602, i.e. such that it is within the presentation position 606, the receiver may receive the signal from the transmitter, indicating that the container 612 is now accurately positioned in the presentation position 606. The receiver may transmit a signal to the controller to indicate this, and the controller may instruct the cover 622 to uncover the opening 620 in response.

This further increases the safety of the port 600 through enabling an interior of the port 600 to be accessed only when the container 612 is in the correct position and therefore only when the conveyor 602 is no longer moving. Through providing more accurate and more complete determinations of container 612 locations, this can also increase the reliability of the port 600 through preventing potential collisions and resulting damage or faults.

In some examples, in response to the indication to the controller that the container 612 is within the presentation position 606, the controller may instruct additional or alternative components of the port to perform defined functions. For example, the controller may instruct a lifting mechanism (to which it is communicatively coupled) underneath the presentation position 606 to lift the container 612 off the surface of the conveyor 602. The lifting mechanism may comprise or be coupled to weighing scales configured to determine the mass of the container 612 and the contents thereof when in the presentation position 606. In further examples, the controller may instruct a locking mechanism (to which it is communicatively coupled) to lock the container 612 in the presentation position 606. The locking mechanism may, for example, comprise an L-shaped bracket immediately rearward of the presentation position 606. The locking mechanism may be moveable into a blocking position to prevent backward movement of the container 612 which may otherwise occur, for example, due to a human operator or robotic picking device contacting or otherwise transmitting force to a side or surface of the container 612.

In some examples, the motor of the conveyor 602 may comprise an encoder communicatively coupled to the controller. The encoder may monitor/determine the longitudinal distance moved by top surface of the conveyor 602 in order to provide an independent determination of where one or more containers 612 on the conveyor 602 are located. This may further increase safety and reliability of the port 600.

In some examples, the port 600 may comprise one or more additional position sensors. For example, the port 600 may comprise a position sensor level with the buffer position 610 along the length of the conveyor 602. This may be used to determine whether there is a container 612 (accurately) positioned in the buffer position 610, for example to verify that it is safe to lower a further container 612 into the transfer position 608.

In some examples, the port 600 may comprise a further position sensor configured as an container 612 overfill sensor. The position sensor may be provided with a transmitter and receiver thereof orientated horizontally and opposite each other with respect to a plane at the top of the container 612 when it is in the presentation position 606. The position sensor may thereby be used to determine whether the container 612 is too full or otherwise whether an item held therein is protruding from the top of the container 612. In response to a signal from the receiver indicating this, the controller may transmit instructions prevent closing of the cover 622 or movement of the container 620 until this is resolved.

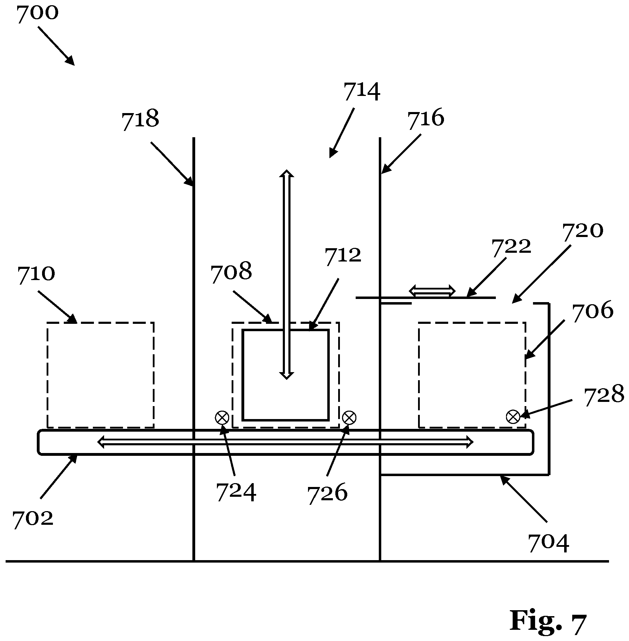

Fig. 7 shows a further example port 700 according to the present disclosure. The port 700 may correspond to the port 600 except where described otherwise below. In particular, the conveyor 702, housing 704, presentation position 706, transfer position 708, buffer position 710, container 712, port column 714, vertical frame members 716, 718, opening 720, cover 722, first position sensor 724 and second position sensor 726 of Fig. 7 may correspond respectively to the conveyor 602, housing 604, presentation position 606, transfer position 608, buffer position 610, container 612, port column 614, vertical frame members 616, 618, opening 620, cover 622, first position sensor 624 and second position sensor 626 of Fig. 6. However, the third position sensor 728 of the port 700 of Fig. 7 may be provided in a different location to the third position sensor 628 of the port 600 of Fig. 6.

The third position sensor 728 may be disposed at a point along the length of the conveyor 702 level with the presentation position 706. Therefore, when the container 712 is correctly positioned within the presentation position 706, the receiver of the third position sensor 728 may not/no longer receiver a signal from the transmitter of the third position sensor 728. The receiver may transmit a signal to the controller of the port 700/of the overall automated storage and retrieval system indicating that the signal from the transmitter is not/no longer received. In response, the controller may instruct the cover 702 to uncover the opening 722 and/or may instruct other components of the port to perform operations as described herein.

As depicted in Fig. 7, the third position sensor 728 may be located at a point along the length of the conveyor 702 within the presentation position 706 but immediately adjacent to a frontward side of the presentation position 706. In other words, the third position sensor 728 may be located adjacent to the first end (see Fig. 5a) of the conveyor 702. This may increase the accuracy with which the position of the container 712 is known since it may only block the third position sensor 728 when the container 712 is completely within the presentation position 728, i.e. all the way to the front of it. There may be no spatial separation between the third position sensor 728 and the frontward side of the presentation position 606, or the spatial separation may be very small (e.g. 1-20 mm).

In other examples, the third position sensor 728 may be located level with other parts of the presentation position 706, for example at a midpoint (longitudinally) of the presentation position 706. In some operational scenarios, it may be known that the conveyor 702 has a container 712 thereon, but it may not be known whether it is, for example, in the transfer position 708 or the presentation position 706. This could not be determined by the first position sensor 724 and the second position sensor 726 alone unless/until the container 712 is moved past one or other of them. The third position sensor 728 therefore disambiguates where the container 712 is located.

In some examples, a port as described herein may comprise both a position sensor 628 located as described in relation to Fig. 6 and a position sensor 728 located as described in relation to Fig. 7.

Fig. 8 shows an example of operation of position sensors according to the present disclosure. Fig. 8 depicts a conveyor 800 comprising a first end 802, a second end 804, a presentation position 806, a transfer position 808 and a buffer position 810, and a container 812 disposed thereon. These may correspond to the correspondingly labelled components of Figs. 5a, 5b, 6 and 7. Fig. 8 depicts a top-down view of the conveyor 800.

Also depicted in Fig. 8 is a first position sensor (corresponding to the first position sensors 624, 724 of Figs. 6-7) comprising a first transmitter 814 and a first receiver 816. Also depicted in Fig. 8 is a second position sensor (corresponding to the second position sensors 626, 726 of Figs. 6-7) comprising a second transmitter 818 and a second receiver 820. Also depicted in Fig. 8 is a third position sensor (corresponding to the third position sensors 628, 728 of Figs. 6-7) comprising a third transmitter 822 and a third receiver 824. While the arrangement of the third position sensor 822, 824 in Fig. 8 corresponds to the arrangement of Fig. 6 (as opposed to that of Fig. 7), this is merely by way of non-limiting example for the purposes of illustration.

As described in relation to Fig. 6, each transmitter 814, 818, 822 may be disposed at a same respective point along the length of the conveyor 800 to the respective receiver 816, 820, 824. Each receiver 816, 820, 824 may be disposed on an opposite lateral side of the conveyor 800 to the respective transmitter 814, 818, 822 and may face towards the respective transmitter 814, 818, 822 such that it is configured to receive a respective signal transmitted therefrom.

The signals transmitted from the transmitters and received/detected by the receivers may be electromagnetic radiation such as visible light or infra-red. The transmitter may comprise a laser or LED and the receiver may comprise a photodiode. The receiver may comprise one or more electrical components, such as a bandpass filter, tuned to the frequency of the radiation emitted by the transmitter, in order to prevent false positive detections. In some examples, the signal may comprise an ultrasound signal. In some examples, instead of comprising pairs of transmitters and receivers, each of the position sensors may instead comprise a transceiver located on one side of the conveyor 800 and a mirror located on the opposite side of the conveyor 800 for reflecting a signal emitted by the transceiver back to the transceiver. The transceiver may thereby detect whether the container 812 is between the transceiver and the mirror in a similar manner to that described above. In some examples, the mirror may not be provided, and the transceiver may instead be configured to receive a signal reflected from a container 812 passing adjacent thereto. The transceiver may thereby detect whether the container 812 is adjacent to the transceiver based on the timing, amplitude or frequency of light reflected from the container 812. In some such examples, the position sensor/transceiver may be a time of flight sensor.

Fig. 8 depicts a scenario, by way of example, in which the container 812 is be moving in a forward direction (towards the first end 802) such that it is currently part-way into the presentation position 806. With the container in this location, the first receiver 816 may receive the signal from the first transmitter 814, the second receiver 820 may receive the signal from the second transmitter 818, and the third receiver 824 may not receive the signal from the third transmitter 822. This is because the container 812 is blocking the line of sight between the third transmitter 822 and the third receiver 824.

However, once the container 812 has been moved forward further by the conveyor 800 such that it is fully within the presentation position 806, the third receiver 824 will receive the signal from the third transmitter 822 because the container 812 will no longer be blocking the line of sight therebetween. As described herein, the third receiver 824 may transmit a signal to the controller to indicate that it is now receiving the signal from the third transmitter 812. In response to this, the controller may instruct the cover of the port to uncover the opening such that the contents of the container 812 can be accessed safely. As described herein, without the third position sensor 822, 824 it may not be known, or not accurately or definitively known, when the container 812 is correctly positioned within the presentation position 806. Therefore, the implementation and positioning of the position sensors as described herein increases the safety and reliability of the corresponding port.

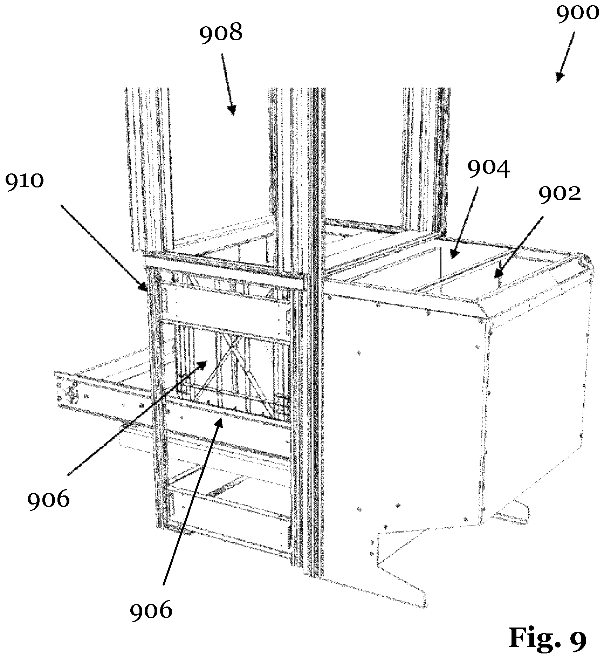

Fig. 9 shows a further example port 900 according to the present disclosure. The port 900 may correspond to and comprise corresponding features to the ports 130, 132, 600, 700 described herein. Depicted in Fig. 9 is an opening 902, a cover 904, a container 906, a port column 908 and vertical frame members 910, which may correspond to the correspondingly labelled components described herein. The cover 904 is depicted as part way through uncovering the opening 902.

The port 900 comprises a conveyor module 912, which may comprise the conveyor as described herein, and may comprise one or more drivers, motors or controllers configured to cause and control movement thereof. The conveyor module 912 may also comprise the position sensors described herein. The position sensors may be integrated into the conveyor module 912, as opposed to, for example, them being fixed to a frame of the port 900. For example, the position sensors may be fixed to a structure of the conveyor module supporting the conveyor/belt/driver thereof. This provides a more modular port in which particular modules thereof may be easily separated from other particular modules thereof.

For example, the port 900 may comprise the conveyor module 912, a cover module (comprising the cover 904 and a driver thereof), and a frame on which the conveyor module 912 and the cover module are supported. The frame may comprise guide blocks or guide profiles configured to interlock with correspondingly shaped features of the conveyor module 912 and/or the cover module, in order to provide a locating mechanism. Integrating the position sensors into the conveyor module 912 provides a more modular solution which enables easier removal, servicing, repair and/or replacement of particular components of the port 900 without requiring exchange or connection/reconnection of extraneous components of the port 900.

In some examples, multiple of the ports 130, 132, 600, 700, 900 described herein may be implemented side-by side, i.e. such that one lateral side of the port is adjacent to a lateral side of another port. In some examples, a lateral side of the housing of a first port may also form/serve as a lateral side of the housing of a second, adjacent port. One, two, three, four, five, or more of the ports may be implemented side-by-side in this manner. This, in combination with the arrangement of the components of each port into respective modules, may enable flexible and adaptable changes to the number of ports implemented, without complex re-engineering being required. For example, an additional port may be implemented adjacent to one or more existing ports in order to flexibly increase throughput in response to increase demand for items stored in the storage grid.

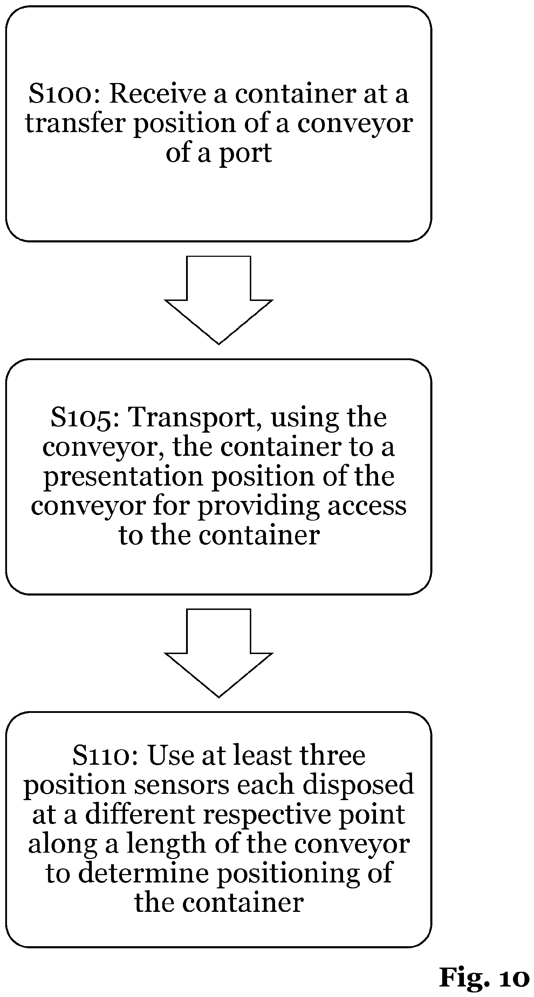

Fig. 10 shows an example method according to the present disclosure. The method may be performed using any of the ports and other components described herein. Any of the functions which the ports and components are described as performing or being configured to perform may be considered as steps of the method. Any of the described steps of the method may be considered as functions which the ports and components thereof perform or are configured to perform.

In a step S100, the method comprises receiving a container at a transfer position of a conveyor of a port. The container may be lowered into the transfer position down a port column by a robot.

In a step S105, the method comprises transporting, using the conveyor, the container to a presentation position of the conveyor for providing access to the container.

In a step S110, the method comprises using at least three position sensors each disposed at a different respective point along a length of the conveyor to determine positioning of the container. At least one of the position sensors may be used to determine that the container is located in the presentation position. In response, a cover may be moved to uncover an opening in the housing of the port, which may enable access to an interior of the container.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A port for an automated storage and retrieval system, the port comprising:
a conveyor configured to transport a container and comprising:
a transfer position for transfer of the container onto and/or off of the conveyor; and
a presentation position for providing access to the container; and
at least three position sensors each disposed at a different respective point along a length of the conveyor and configured to determine positioning of the container.

2. The port of claim 1, wherein the conveyor is configured to transport the container between a first end of the conveyor and a second end of the conveyor, the presentation position being located at the first end of the conveyor.

3. The port of claim 2, wherein the at least three position sensors comprise:
a first position sensor adjacent to a first side of the transfer position;
a second position sensor adjacent to a second side of the transfer position; and
a third position sensor disposed more proximal to the first end of the conveyor than the first position sensor and the second position sensor are.

4. The port of claim 3, wherein the third position sensor is disposed at a point along the length of the conveyor between the transfer position and the presentation position.

5. The port of claim 3, wherein the third position sensor is disposed at a point along the length of the conveyor level with the presentation position.

6. The port of any of claims 2-5, wherein the conveyor further comprises a buffer position located at the second end of the conveyor.

7. The port of claim 6, comprising a fourth position sensor disposed at a point along the length of the conveyor level with the buffer position.

8. The port of any preceding claim, wherein each of the position sensors comprises a respective transmitter configured to transmit a respective signal and a respective receiver configured to receive the respective signal.

9. The port of claim 8, wherein the transmitter is disposed on a first lateral side of the conveyor, and the receiver is disposed on a second lateral side of the conveyor and at a point along the length of the conveyor level with the transmitter.

10. The port of claim 8 or claim 9, wherein the signal comprises electromagnetic radiation.

11. The port of any of claims 8-10, wherein the port comprises a controller configured to:
determine that the container is not disposed between the transmitter and the receiver in response to the receiver indicating receipt of the signal;
determine that the container is disposed between the transmitter and the receiver in response to the receiver not indicating receipt of the signal.

12. The port of claim 11, wherein the port comprises an opening and a cover, wherein the controller is configured to cause the cover to selectively cover or uncover the opening in response to an indication from the receiver.

13. The port of any preceding claim, wherein the position sensors are coupled to the conveyor and the position sensors and the conveyor are comprised in a conveyor module.

14. An automated storage and retrieval system comprising:
a storage grid configured to store a plurality of containers; and
the port of any preceding claim coupled to the storage grid.

15. A method performed by a port for an automated storage and retrieval system, the method comprising:
receiving a container at a transfer position of a conveyor of the port;
transporting, using the conveyor, the container to a presentation position of the conveyor for providing access to the container; and
using at least three position sensors each disposed at a different respective point along a length of the conveyor to determine positioning of the container.

## Amended claims

### Amended claims in accordance with Rule 137(2) EPC.

1. A port (600, 700, 900) for an automated storage and retrieval system, the port (600, 700, 900) comprising:
a conveyor (500, 602, 702, 800) configured to transport a container (512, 612, 712, 812, 906) and comprising:
a transfer position (508, 608, 708, 808) for transfer of the container (512, 612, 712, 812, 906) onto and/or off of the conveyor (500, 602, 702, 800); and
a presentation position (506, 606, 706, 806) for providing access to the container (512, 612, 712, 812, 906); and
at least three position sensors (624, 724, 626, 726, 628, 728) each disposed at a different respective point along a length of the conveyor (500, 602, 702, 800) and configured to determine positioning of the container (512, 612, 712, 812, 906),
wherein the port (600, 700, 900) comprises a cover (622, 722, 904) and an opening (620, 720, 902), wherein the cover (622, 722, 904) is configured to move to uncover the opening (620, 720, 902) in response to a determination using at least one of the position sensors (624, 724, 626, 726, 628, 728) that the container (512, 612, 712, 812, 906) is located in the presentation position (506, 606, 706, 806).

2. The port (600, 700, 900) of claim 1, wherein the conveyor (500, 602, 702, 800) is configured to transport the container (512, 612, 712, 812, 906) between a first end (802) of the conveyor (500, 602, 702, 800) and a second end (804) of the conveyor (500, 602, 702, 800), the presentation position (506, 606, 706, 806) being located at the first end (802) of the conveyor (500, 602, 702, 800).

3. The port (600, 700, 900) of claim 2, wherein the at least three position sensors (624, 724, 626, 726, 628, 728) comprise:
a first position sensor (624, 724) adjacent to a first side of the transfer position (508, 608, 708, 808);
a second position sensor (626, 726) adjacent to a second side of the transfer position (508, 608, 708, 808); and
a third position sensor (628, 728) disposed more proximal to the first end (802) of the conveyor (500, 602, 702, 800) than the first position sensor (624, 724) and the second position sensor (626, 726) are.

4. The port (600, 700, 900) of claim 3, wherein the third position sensor (628, 728) is disposed at a point along the length of the conveyor (500, 602, 702, 800) between the transfer position (508, 608, 708, 808) and the presentation position (506, 606, 706, 806).

5. The port (600, 700, 900) of claim 3, wherein the third position sensor (628, 728) is disposed at a point along the length of the conveyor (500, 602, 702, 800) level with the presentation position (506, 606, 706, 806).

6. The port (600, 700, 900) of any of claims 2-5, wherein the conveyor (500, 602, 702, 800) further comprises a buffer position (510, 610, 710, 810) located at the second end (804) of the conveyor (500, 602, 702, 800).

7. The port (600, 700, 900) of claim 6, comprising a fourth position sensor disposed at a point along the length of the conveyor (500, 602, 702, 800) level with the buffer position (510, 610, 710, 810).

8. The port (600, 700, 900) of any preceding claim, wherein each of the position sensors (624, 724, 626, 726, 628, 728) comprises a respective transmitter (814, 818, 822) configured to transmit a respective signal and a respective receiver (816, 820, 824) configured to receive the respective signal.

9. The port (600, 700, 900) of claim 8, wherein the transmitter (814, 818, 822) is disposed on a first lateral side of the conveyor (500, 602, 702, 800), and the receiver (816, 820, 824) is disposed on a second lateral side of the conveyor (500, 602, 702, 800) and at a point along the length of the conveyor (500, 602, 702, 800) level with the transmitter (814, 818, 822).

10. The port (600, 700, 900) of claim 8 or claim 9, wherein the signal comprises electromagnetic radiation.

11. The port (600, 700, 900) of any of claims 8-10, wherein the port (600, 700, 900) comprises a controller (500) configured to:
determine that the container (512, 612, 712, 812, 906) is not disposed between the transmitter (814, 818, 822) and the receiver (816, 820, 824) in response to the receiver indicating receipt of the signal;
determine that the container (512, 612, 712, 812, 906) is disposed between the transmitter (814, 818, 822) and the receiver (816, 820, 824) in response to the receiver (816, 820, 824) not indicating receipt of the signal.

12. The port (600, 700, 900) of claim 11, wherein the controller (500) is configured to cause the cover (622, 722, 904) to selectively cover or uncover the opening (620, 720, 902) in response to an indication from the receiver (816, 820, 824).

13. The port (600, 700, 900) of any preceding claim, wherein the position sensors (624, 724, 626, 726, 628, 728) are coupled to the conveyor (500, 602, 702, 800) and the position sensors (624, 724, 626, 726, 628, 728) and the conveyor (500, 602, 702, 800) are comprised in a conveyor module (912).

14. An automated storage and retrieval system comprising:
a storage grid configured to store a plurality of containers (512, 612, 712, 812, 906); and
the port (600, 700, 900) of any preceding claim coupled to the storage grid.

15. A method performed by a port (600, 700, 900) for an automated storage and retrieval system, the method comprising:
receiving (S100) a container at a transfer position (508, 608, 708, 808) of a conveyor (500, 602, 702, 800) of the port (600, 700, 900);
transporting (S105), using the conveyor (500, 602, 702, 800), the container (512, 612, 712, 812, 906) to a presentation position (506, 606, 706, 806) of the conveyor (500, 602, 702, 800) for providing access to the container (512, 612, 712, 812, 906);
using (S110) at least three position sensors (624, 724, 626, 726, 628, 728) each disposed at a different respective point along a length of the conveyor (500, 602, 702, 800) to determine positioning of the container (512, 612, 712, 812, 906);
using at least one of the position sensors (624, 724, 626, 726, 628, 728) to determine that the container (512, 612, 712, 812, 906) is located in the presentation position (506, 606, 706, 806); and
in response, moving a cover (622, 722, 904) of the port (600, 700, 900) to uncover an opening (620, 720, 902) of the port (600, 700, 900).
